# EUROPÄISCHE PATENTSCHRIFT

(11) **EP 3 738 719 B1**
(45) Veröffentlichungstag und Bekanntmachung des Hinweises auf die Patenterteilung: **01.05.2024**
(21) Anmeldenummer: 19174243.6
(22) Anmeldetag: 13.05.2019
(51) Int. Cl.: B25J 9/00, B25J 19/02, B25J 19/06, B65G 1/137, B65H 67/06, B65G 61/00

(54) **MOBILER KOMMISSIONIERROBOTER, WARE-ZUR-PERSON KOMMISSIONIERARBEITSPLATZ UND KOMMISSIONIERSYSTEM**
MOBILE PICKING ROBOT, GOODS-TO-PERSON PICKING WORKSTATION AND PICKING SYSTEM
ROBOT DE PRÉPARATION DE COMMANDES MOBILE, POSTE DE TRAVAIL DE PRÉPARATION DE COMMANDES MARCHANDISE VERS HOMME ET SYSTÈME DE PRÉPARATION DE COMMANDES

(43) Veröffentlichungstag der Anmeldung: 18.11.2020
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl Schübel-Hopf & Partner

(56) Entgegenhaltungen:
- CN-A- 106 276 009
- JP-A- 2009 279 663
- US-A1- 2015 197 006
- US-A1- 2017 269 607
- US-A1- 2018 273 296
- US-A1- 2019 099 902
- US-A1- 2019 127 147

## Beschreibung

Die Erfindung betrifft einem mobilen Kommissionierroboter nach dem Oberbegriff des Anspruchs 1.

Beim Kommissionieren nach dem Prinzip Ware-zur-Person (auch als "Ware-zum-Mann" bezeichnet) werden Behälter mit Fördertechnik zu einem Kommissionierarbeitsplatz transportiert, wo eine Kommissionierperson gemäß einem Kommissionierauftrag Artikel aus Quellbehältern entnimmt und in Zielbehältern oder Karton ablegt. Nach dem Abschluss des Kommissioniervorgangs werden die Quellbehälter und/oder Zielbehälter/Kartons von der Fördertechnik abtransportiert. Aus der EP 11709383 A ist ein Kommissioniersystem bekannt, in dem die Aktivitäten der Kommissionierperson mit einer fest installierten Kamera überwacht werden.

Aus der DE 102006057758 A, der EP 7725445 A und der DE 102008046325 A1 sind verschiedene, fest an einem Kommissionierplatz installierte Kommissionierroboter bekannt.

Aus der WO 2014166650 A1 ist ein Lager- und Kommissioniersystem zum vollautomatisierten Kommissionieren von Artikeln mit einem mannlos arbeitenden Kommissionierplatz bekannt, an dem eine vollautomatische Roboter- und Greifeinheit unterstützt von einer Bilderkennungseinrichtung mit zumindest zwei Kameras den Kommissionierauftrag ausführt.

Aus der US 2015-197006 A1 ist ein Robotersystem nach dem Oberbegriff des Anspruchs 1 mit einem höhenverstellbaren Arbeitstisch und über dem Arbeitstisch angeordneten Kameras bekannt. Weiterer relevanter Stand der Technik ist in den Dokumenten US 2019 - 0127147 A1, US 2017-269607 A1, US 2018-273296 A1, US 2019-099902 A1, CN 106 276 009 A und JP 2009 279663 A.

Kommissionierplätze sind entweder für menschliche Kommissionierpersonen ausgelegt oder mit Kommissionierrobotern ausgestattet. Ein Nachrüsten eines Kommissionierroboters und/oder ein Umrüsten eines vollautomatischen Kommissionierplatzes ist sehr aufwendig, da der Roboter installiert werden muss, die Fördertechnik umgebaut oder ausgetauscht werden muss und andere, auf den Menschen ausgelegte Geräte wie Bildschirme etc. installiert oder deinstalliert werden müssen.

Der Erfindung liegt insbesondere die Aufgabe zugrunde, einen mobilen Kommissionierroboter bereitzustellen, der flexibel einsetzbar ist, insbesondere auch an einem ansonsten für menschliche Kommissionierpersonen geeigneten und ausgelegten Kommissionierplatz, so dass dieser nach Bedarf einfach nach- oder umgerüstet oder auch nur zu bestimmten Zeiten eingesetzt werden kann, bspw. bei Hochlastspitzen oder Sonder-/Nachtschichten. Ferner liegt der Erfindung die Aufgabe zugrunde, ein für diesen Kommissionierroboter geeigneten Kommissionierplatz und ein Kommissioniersystem mit einem solchen Kommissionierroboter bereitzustellen.

Die Aufgabe wird gelöst durch einen mobilen Kommissionierroboter mit den Merkmalen des Anspruchs 1. Vorteilhafte Ausgestaltungen der Erfindung ergeben sich aus den Unteransprüchen.

Die Erfindung betrifft einen Kommissionierroboter mit einem verfahrbaren Sockel und einem auf dem Sockel angeordneten Greifarm zum Kommissionieren von Waren an einem Kommissionierarbeitsplatz.

Es wird vorgeschlagen, den Kommissionierroboter mit wenigstens einem, unabhängig vom Greifarm an dem Sockel befestigten Tragarm zum Tragen wenigstens einer Kamera, vorzugsweise 3D-Kamera zum Überwachen des Kommissioniervorgangs auszustatten. Durch die Verbindung der Kamera mit dem Sockel entfällt eine separate Montage und ein Anlernen der relativen Position des Greifarms und der Kamera. Der mobile Kommissionierroboter kann einfach an den Kommissionierplatz gerollt werden und in Betrieb genommen werden.

Die Umrüstung des Kommissionierarbeitsplatzes zu einem vollautomatischen bzw. zu einem manuellen Kommissionierarbeitsplatz wird durch die Erfindung sehr vereinfacht, so dass z.B. sogar ein Umrüsten zwischen Schichten im Schichtbetreib oder für Unterstützung bei Leistungsspitzen möglich und wirtschaftlich durchführbar wird. Es kann z.B. der Kommissionierplatz in einer Nachtschicht mit einem Kommissionierroboter ausgestattet werden und in einer Tagschicht manuell betrieben werden.

Der Sockel hat vorzugsweise eine Höhe, die einen Einsatz des Kommissionierroboters anstatt eines Menschen an einem Arbeitsplatz ermöglicht, dessen Tischhöhe ergonomisch auf menschliche Kommissionierpersonen abgestimmt ist, also z.B. eine Höhe von 60 - 100 cm. Auch eine Reichweite des Greifarms sollte zumindest in der Größenordnung derjenigen einer menschlichen Kommissionierperson entsprechen, z.B. zwischen 70 und 120 cm liegen.

In einer besonders vorteilhaften Ausgestaltung der Erfindung ist der Greifarm höhenverstellbar auf dem Sockel montiert, so dass die Höhe des Greifarms an die Höhe der Fördertechnik bzw. Kommissionieranlage und Ladungsträgerhöhe angepasst werden kann. Ferner wird vorgeschlagen, den Kommissionierroboter mit einer in dem Sockel angeordneten Steuerung, vorzugsweise mit Bildverarbeitungssoftware zum Verarbeiten der von der 3D-Kamera erfassten Bilddaten, zum Steuern des Greifarms abhängig von den Bilddaten auszustatten. Der Kommissionierroboter wird dadurch zu einer Plug-and-Play-Vorrichtung, die praktisch keine externe Steuerung benötigt.

Erfindungsgemäß sind an einer Vorderseite des Sockels, die im Betrieb einer Fördertechnik des Kommissionierarbeitsplatzes zugewandt ist, Arretierungsmittel zum Arretieren des Sockels in einer vorgegebenen Position relativ zur Fördertechnik vorgesehen. Der Kommissionierroboter kann dadurch einfach an die Fördertechnik herangeschoben und am vorgegebenen Platz arretiert werden, ohne aufwendig justieren und kalibrieren zu müssen.

Insbesondere wird vorgeschlagen, dass die Arretierungsmittel Führungsschrägen, insbesondere eine trichterartige Anordnung von Führungsflächen, zum Zentrieren des Sockels beim Arretieren umfassen. Dadurch können ein automatisches, selbsttätiges Zentrieren und eine genaue Positionierung gewährleistet werden.

In einer besonders vorteilhaften Ausgestaltung der Erfindung umfassen die Arretierungsmittel eine lösbare Rastverbindung, die optional auch Schaltkontakte umfassen kann, die von der Steuerung überwacht werden, so dass der Kommissionierroboter nur dann in Betrieb genommen werden kann, wenn er vollständig und korrekt arretiert ist.

Ferner wird vorgeschlagen, dass die Arretierungsmittel an einem unteren Rand des Sockels angeordnet sind und von einer Vorderseite des Sockels in Richtung der Fördertechnik des Kommissionierarbeitsplatzes vorspringen. Dadurch kann erreicht werden, dass die an der Fördertechnik vorgesehenen Gegenstücke der Arretierungsmittel die Kommissionierperson beim Betrieb des Kommissionierarbeitsplatzes ohne Roboter nicht stören, insbesondere die Fußfreiheit der Kommissionierperson nicht beeinträchtigen.

Am Sockel können bei Bedarf eine oder mehrere Gewichte, z.B. Gewichtsplatten, befestigt sein, die ein Kippen des Sockels auch bei weit ausgreifendem Greifarm und höherem Gewicht des gegriffenen Artikels vermeiden.

In einer weiteren Ausgestaltung der Erfindung ist an einer Seitenfläche des Sockels wenigstens eine Halterung für auswechselbare Greifwerkzeuge vorgesehen. Der Kommissionierroboter kann dann abhängig von den zu greifenden Artikeln selbsttätig ein geeignetes Greifwerkzeug mit dem Ende seines Greifarms verbinden, z.B. einen Tütengreifer, einen Paketgreifer, Sauggreifer, Klauengreifer oder magnetischen Greifer.

In einer besonders vorteilhaften Ausgestaltung der Erfindung umfasst der Kommissionierroboter wenigstens zwei Tragarme oder wenigstens zwei Zweige eines Tragarms zum Halten von jeweils wenigstens einer Kamera, insbesondere 3D-Kamera, wobei die eine Kamera zum Überwachen eines Quellbehälters am Kommissionierarbeitsplatz ausgelegt ist und die andere Kamera zum Überwachen eines Zielbehälters/Kartons am Kommissionierarbeitsplatz ausgelegt ist. Die wenigstens zwei Zweige des Tragarms können z.B. die Enden einer bzw. zwei Quertraversen sein. Durch die Bereitstellung mehrerer, insbesondere unabhängig voneinander positionierbarer Kameras kann der Kommissionierroboter einfach an die Gegebenheiten des Kommissionierplatzes angepasst werden, z.B. auch dann eingesetzt werden, wenn Quell- und Zielbehälter auf in einem rechten Winkel zueinander stehenden Tischen oder Förderbahnen angeordnet sind.

Ferner wird vorgeschlagen, den Kommissionierroboter mit wenigstens einem an dem Sockel angeordneten Sensor zum Erkennen eines Menschen in einer Umgebung des Sockels und/oder Greifarms auszustatten. Insbesondere können zwei Sicherheitsscanner angebracht sein, die einen sich über 270 Grad erstreckenden Sicherheitsbereich seitlich und hinter dem Roboter abdecken, um auch bei verschiedenen Kommissionier-Arbeitsplatztypen immer den kompletten zugänglichen Bereich seitlich oder hinter dem Kommissionierroboter abgesichert zu haben. Vorteilhaft sind diese Scanner zwischen 20 und 50 cm, insbesondere ca. 30cm über dem Boden angebracht. Der Sensor kann insbesondere die einschlägigen Normen für kollaborierende Robotersysteme erfüllen, z.B. EN ISO 10218-2, EN ISO 12100 und EN ISO 13849-1.

In einer besonders vorteilhaften Ausgestaltung der Erfindung umfasst der Kommissionierroboter wenigstens eine Versorgungsleitung zum Anschluss des Kommissionierroboters an eine Energieversorgung, Druckluft und/oder an ein Datennetz und einer Halterung zum Halten der Versorgungsleitung beim Verfahren des Kommissionierroboters oder in der Parkposition. Die Versorgungsleitung kann die Stromversorgung, Druckluftversorgung und Verbindung zu einem Datennetzwerk herstellen, vorzugsweise über eine einzige Steckverbindung mit einem entsprechenden Stecker am Kommissionierarbeitsplatz. Die Halterung kann ein an der Außenseite des Sockels vorgesehener Blindstecker, Haken oder Schlauchhalter sein oder alternativ ein Kabelaufroller/Kabeleinzug.

Ferner wird vorgeschlagen, dass an dem Sockel Rollen zum Verfahren des Kommissionierroboters und Stützen zum Herstellen eines stabilen Stands am Zielort des Kommissionierroboters vorgesehen sind. Die Stützen können einzeln oder gemeinsam ausfahrbare oder herausschraubbare Standfüße sein, die beispielsweise von Hand oder mit einem Fußhebel betätigbar sein können oder mit Linearaktuatoren versehen sind, die die Standfüße herausfahren. Zum Ausrichten des Sockels kann an diesem eine Libelle vorgesehen sein. Es wären auch Ausgestaltungen der Erfindung denkbar, in denen die Rollen gebremst oder blockiert werden können.

In einer besonders vorteilhaften Ausgestaltung der Erfindung wird vorgeschlagen, dass an dem Sockel wenigstens ein Start-Stopp-Schalter vorgesehen ist, wobei eine Steuerung dazu ausgelegt ist, den Kommissionierbetrieb nach einer Betätigung des Start-Stopp-Schalters zum Starten des Kommissionierbetriebs erst dann zu starten, wenn der Sicherheitssensor keinen Menschen mehr in einer Umgebung des Sockels und/oder Greifarms erkennt.

Dadurch kann eine besonders bequeme und sichere Inbetriebnahme erreicht werden. Der Benutzer rollt den Kommissionierroboter zum Kommissionierplatz, arretiert ihn, fährt ggf. die Stützen aus, schließt die Versorgungsleitung an und betätigt den Startknopf. Der Kommissionierroboter beginnt dann den Kommissionierbetrieb, sobald der Benutzer die Gefahrenzone verlassen hat. Um unbefugte Benutzung zu verhindern kann zusätzlich ein Schlüsselschalter verbaut sein.

Ein weiterer Aspekt der Erfindung betrifft ein Kommissioniersystem, das einen Kommissionierroboter der vorgenannten Art und einen Kommissionierarbeitsplatz mit Fördertechnik zum An- oder Abtransportieren von Quell- oder Zielbehältern mit Mitteln zum Arretieren des Sockels des Kommissionierroboters umfasst. Der Kommissionierarbeitsplatz kann ferner einen Anschluss für die Versorgungsleitung und ggf. Markierungen zum Visualisieren der Sollposition des Kommissionierroboters umfassen. Die am Kommissionierarbeitsplatz vorgesehenen Mittel zum Arretieren sind die Gegenstücke derjenigen des Kommissionierroboters. Am Kommissionierarbeitsplatz können ferner ein Monitor zur Anzeige von Arbeitsanweisungen für einen menschlichen Benutzer, ein Not-Stop für die Fördertechnik, der insbesondere auch den Kommissionierroboter stilllegen kann.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 einen Kommissionierroboter nach einem ersten Ausführungsbeispiel der Erfindung;
Fig. 1a eine Detaildarstellung zu den Arretierungsmitteln des Kommissionierroboters nach Fig. 1;
Fig. 2 einen Kommissionierarbeitsplatz nach dem ersten Ausführungsbeispiel der Erfindung;
Fig. 3 ein Kommissioniersystem nach dem ersten Ausführungsbeispiel der Erfindung;
Fig. 4 ein Kommissioniersystem mit Fördertechnik und einem Kommissionierroboter mit zwei unabhängig verstellbaren Zweigen des Tragarms nach einem weiteren Ausführungsbeispiel der Erfindung in einer Draufsicht;
Fig. 5 einen Kommissionierroboter mit zwei Tragarmen nach einem weiteren Ausführungsbeispiel der Erfindung in einer Draufsicht; und
Fig. 6 Kommissioniersystem mit Fördertechnik und einemeinem Kommissionierroboter mit zwei Kameras nach einem weiteren Ausführungsbeispiel der Erfindung in einer Draufsicht für einen Kommissionierarbeitsplatz mit z.B. rechtwinkliger Anordnung des Quell- und Zielbehälters.

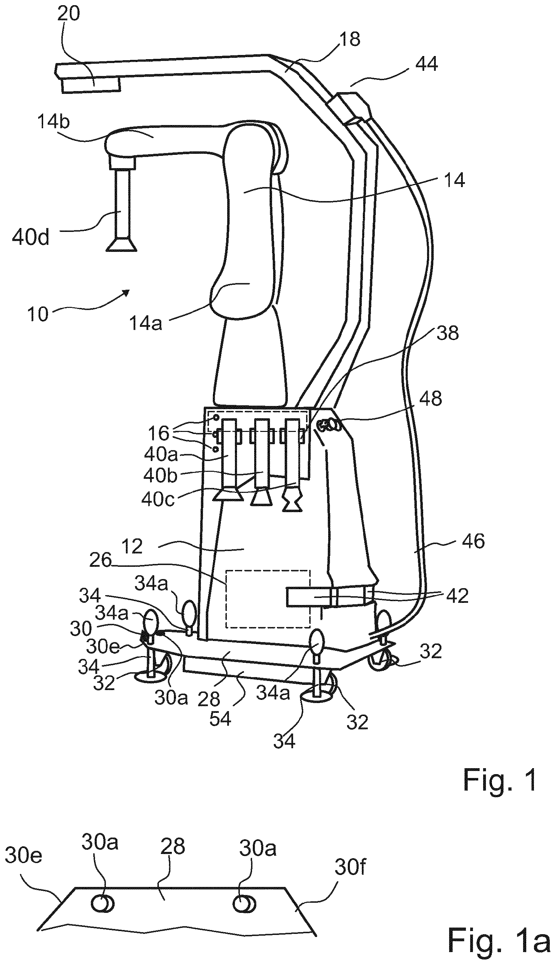

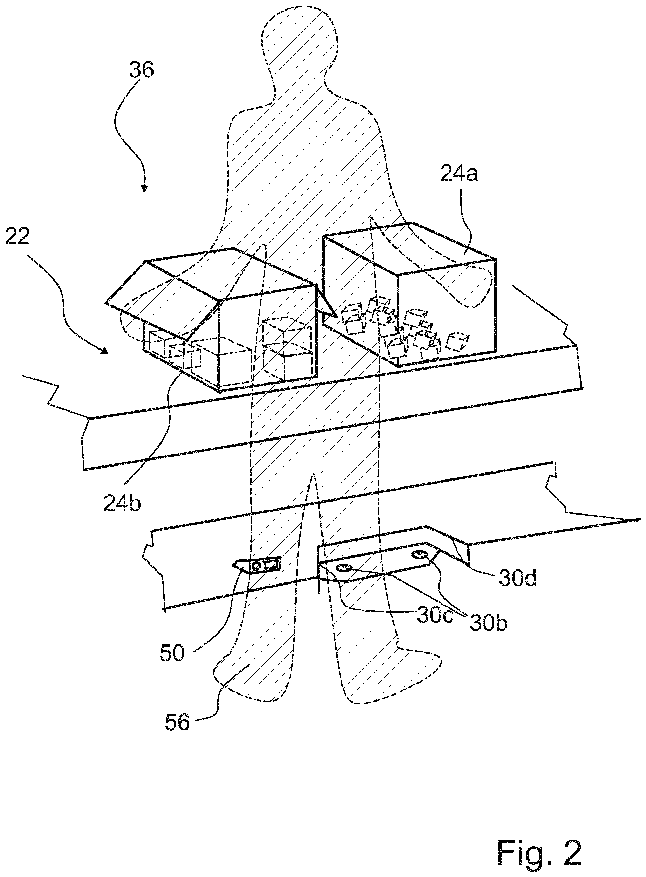

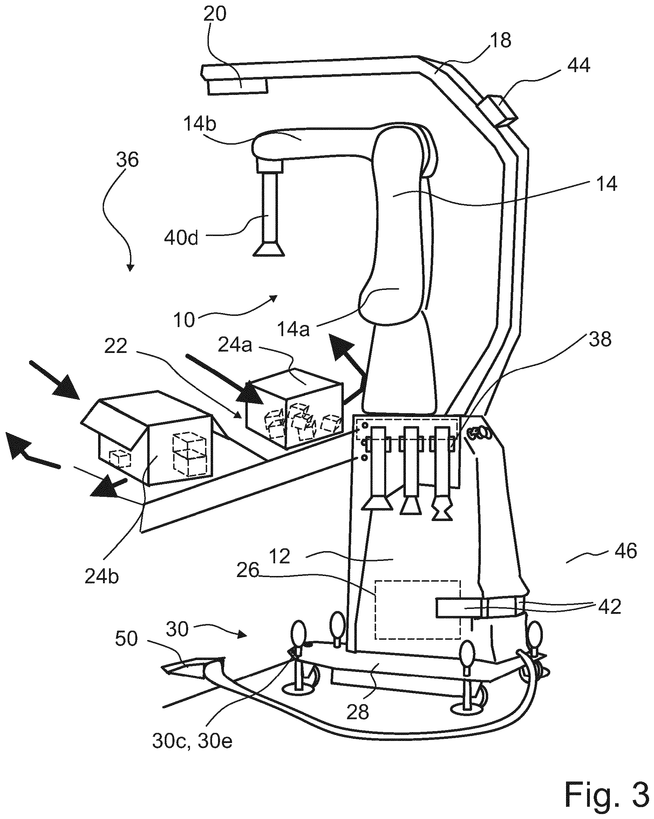

Figur 1 zeigt einen Kommissionierroboter 10 mit einem verfahrbaren Sockel 12 und einem auf dem Sockel 12 angeordneten Greifarm 14 zum Kommissionieren von Waren an einem Kommissionierarbeitsplatz 36 (Figuren 2 und 3) nach einem ersten Ausführungsbeispiel der Erfindung. Der Greifarm 14 ist höhenverstellbar auf dem Sockel 12 montiert. Dazu kann eine Basis des Greifarms 14 mit in verschieden Höhen im Sockel 12 angebrachten Löchern 16 verschraubt werden.

Neben dem Greifarm 14 umfasst der Kommissionierroboter 10 erfindungsgemäß einen unabhängig vom Greifarm 14 an dem Sockel 12 befestigten Tragarm 18 zum Tragen wenigstens einer Kamera 20 zum Überwachen des Kommissioniervorgangs. Die Kamera 20 ist am freien Ende des Tragarms 18 in einer in Längsrichtung des Tragarms 18 verstellbaren Position montiert. Der Greifarm 14 und der Tragarm 18 kragen zu einer Fördertechnik 22 (Fig. 2 und 3) zugewandten Vorderseite des Sockels 12 hin aus. Der Tragarm 18 ist bezogen auf die Richtung der Vorderseite hinter dem Greifarm 14 angeordnet und überragt in der Höhe in der in Fig. 1 dargestellten Konfiguration des Greifarms 14 mit aufrechtem erstem Glied 14a und horizontalem zweitem Glied 14b den Greifarm 14 um 10 - 30 cm. Ferner ist die Auskragung des Greifarms 14 auch unter Berücksichtigung der im hinteren Bereich des Sockels 12 gelegenen Montageposition so gewählt, dass die Kamera 20 in einer in der in Fig. 1 dargestellten Konfiguration in der vertikalen Richtung vor dem freien Ende des Greifarms 14 angeordnet ist und wenigstens 40-60 vor einer Vorderseite des Sockels 12 angeordnet ist, so dass sie etwa mittig über Quell- und/oder Zielbehältern 24a, 24b auf der Fördertechnik 22 liegt (Fig. 3).

In dem Sockel 12 ist eine Steuerung 26 vorzugsweise mit Bildverarbeitungssoftware zum Verarbeiten der von der Kamera 20 erfassten Bilddaten und zum Steuern des Greifarms 14 abhängig von den Bilddaten angeordnet. Die Datenübertragung zwischen der Kamera 20 und der Steuerung 26 verläuft im Inneren des Tragarms 18.

Der Sockel 12 umfasst an seinem unteren Ende eine Bodenplatte 28, an deren Vorderseite, die im Betrieb einer Fördertechnik 22 des Kommissionierarbeitsplatzes 36 zugewandt ist, Arretierungsmittel 30 zum Arretieren des Sockels 12 in einer vorgegebenen Position relativ zur Fördertechnik 22. In dem in Fig. 1 dargestellten Ausführungsbeispiel umfassen die Arretierungsmittel 30 auf der Seite der Fördertechnik 22 angeordnete kegelförmige Zentrierelemente 30b (Fig. 2) mit zentralen Öffnungen, in welche Raststifte 30a (Fig. 1a), die an einem vorderen Rand der Bodenplatte 28 des Kommissionierroboters 10 angebracht sind, eingreifen können. Die Zentrierelemente 30b und die Raststifte 30a (Fig. 1a) bilden eine lösbare Rastverbindung. Unter die Bodenplatte 28 können bei Bedarf Gewichtsplatten 54 geschraubt werden, die eine Kippsicherheit des Kommissionierroboters 10 verbessern.

An jeder der vier Ecken der Bodenplatte 28 sind Rollen 32 zum Verfahren des Kommissionierroboters 10 und Stützen 34 zum Herstellen eines stabilen Stands am Zielort des Kommissionierroboters 10 vorgesehen. Die Stützen 34 können mit Schraubgriffen 34a manuell oder automatisch herausgeschraubt/hereingeschraubt werden.

Der Benutzer rollt den Kommissionierroboter 10 auf den Rollen 32 zu seiner Soll-Position vor der Fördertechnik 22 arretiert den Roboter in der Andockvorrichtung und schraubt dann zur Stabilisation die Stützen 34 so weit heraus, dass der Sockel 12 stabil auf den Stützen 34 steht und nicht mehr weggerollt werden kann.

Ferner umfassen die Arretierungsmittel 30 Führungsschrägen 30c, 30d auf der Seite der Fördertechnik (Fig. 2) und komplementäre Führungsschrägen 30e, 30f auf der Seite des Roboters zum Zentrieren des Sockels 12 beim Arretieren.

Die Vorderseite der Bodenplatte 28 des Sockels 12 springt in Richtung der Fördertechnik 22 des Kommissionierarbeitsplatzes 36 vor.

An einer Seitenfläche des Sockels 12 ist eine Halterung 38 für auswechselbare Greifwerkzeuge 40a - 40d vorgesehen.

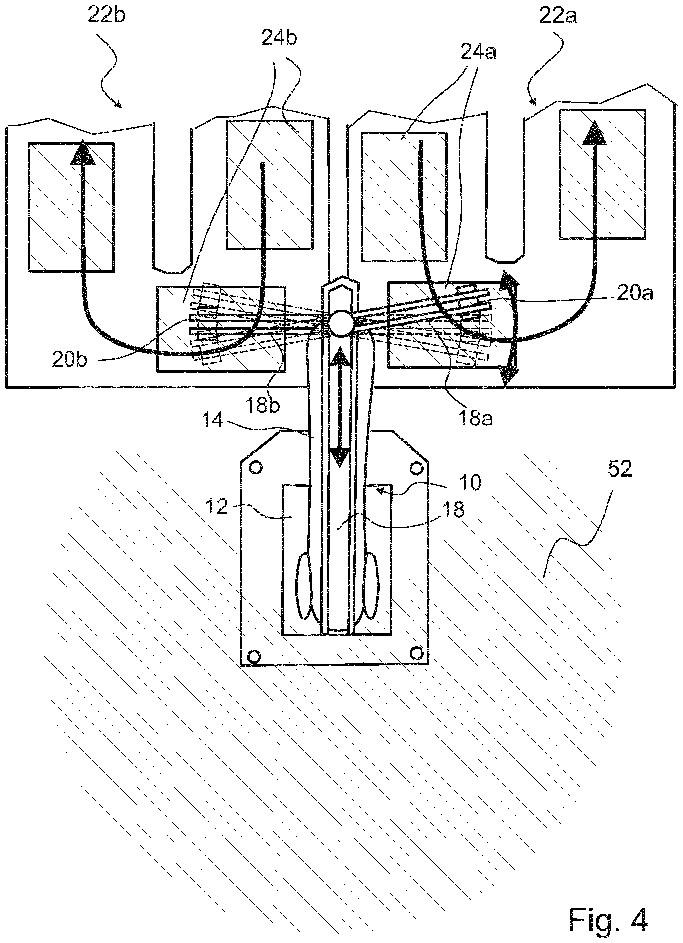

An einer Rückseite des Sockels 12 ist auf beiden Seiten je ein Sensor 42 auf einer Höhe von ca. 30 cm zum Erkennen eines Fremdobjekts oder eines Menschen in einer Umgebung des Sockels 12 und/oder Greifarms 14 angeordnet, die einen sich über 270 Grad erstreckenden Sicherheitsbereich 52 (Fig. 4) hinter oder seitlich des Kommissionierroboters 10 abdeckt.

Ferner ist an der Rückseite des Sockels 12 eine als Blindstecker ausgestaltete Halterung 44 für eine Versorgungsleitung 46 zum Anschluss des Kommissionierroboters 10 an eine Energieversorgung, Druckluft und/oder an ein Datennetz vorgesehen. Die Versorgungsleitung 46 kann für den Transport des Kommissionierroboters 10 in die Halterung 44 eingesteckt werden.

Ferner ist an dem Sockel 12 ein Start-Stopp-Schalter 48 vorgesehen. Die Steuerung 26 ist durch geeignete Software dazu ausgelegt, den Kommissionierbetrieb nach einer Betätigung des Start-Stopp-Schalters 48 zum Starten des Kommissionierbetriebs erst dann zu starten, wenn der Sensor 42 keinen Menschen mehr in einer Umgebung des Sockels 12 und/oder Greifarms 14 erkennt.

Fig. 2 zeigt den Kommissionierarbeitsplatz 36 mit der Fördertechnik 22 zum An- oder Abtransportieren von Quell- oder Zielbehältern 24a, 24b mit Mitteln zum Arretieren eines Sockels 12 eines Kommissionierroboters 10 der vorgenannten Art, und zwar mit den Zentrierelementen 30b und zu den Führungsschrägen 30e, 30f komplementären Führungsschrägen 30c,30d. Eine Kommissionierperson 56 ist schematisch angedeutet. Ferner ist ein Anschluss 50 für die Versorgungsleitung 46 vorgesehen. Selbstverständlich könnte in alternativen Ausgestaltungen der Erfindung die Zentrierelemente 30b am Kommissionierroboter 10 und die Raststifte 30a am Kommissionierarbeitsplatz 22 vorgesehen sein oder es könnten andere zueinander komplementäre Rastverbindungsmittel verwendet werden.

Fig. 3 zeigt ein Kommissioniersystem, umfassend einen Kommissionierroboter 10 und einen Kommissionierarbeitsplatz 36 der vorgenannten Art. Die Raststifte 30a greifen in die Zentrierelemente 30b ein, die Führungsschrägen 30c, 30d liegen an den Führungsschräge 30e, 30f an und die Versorgungsleitung 46 ist in den Anschluss 50 eingesteckt. Die Stützen 34 sind abgesenkt und tragen den Hauptteil des Gewichts des Kommissionierroboters 10. Der Kommissionierroboter 10 ist damit betriebsbereit.

Die Figuren 4 - 6 zeigen weitere Ausführungsbeispiele der Erfindung. Um Wiederholungen zu vermeiden, beschränkt sich die nachfolgende Beschreibung dieser weiteren Ausführungsbeispiele im Wesentlichen auf Unterschiede zu dem ersten Ausführungsbeispiel der Erfindung. Wegen der unveränderten Merkmale wird der Fachmann auf die Beschreibung zum ersten Ausführungsbeispiel verwiesen. Für gleich oder ähnlich wirkende Merkmale der weiteren Ausführungsbeispiele werden gleiche Bezugszeichen verwendet, um die Ähnlichkeiten zu betonen.

Fig. 4 zeigt ein Kommissioniersystem mit einem Kommissionierroboter mit zwei unabhängig verstellbaren Zweigen 18a, 18b der Kameratragarme 18 nach einem weiteren Ausführungsbeispiel der Erfindung in einer Draufsicht. Der Sicherheitsbereich 52 ist als schraffiertes Kreissegment angedeutet. Der Sicherheitsbereich 52 erstreckt sich über ein Kreissegment mit einem Winkel von ca. 270° und einem Radius von ca. 3-5 m. Die zwei Zweige 18a, 18b sind unabhängig voneinander schwenkbar an dem Tragarm 18 befestigt, wobei die Befestigungsposition am Tragarm 18 in der Längsrichtung des Tragarms 18 verschoben werden kann.

An dem in Fig. 4 dargestellten Kommissioniersystem steht die Kommissionierperson bzw. der Kommissionierroboter 10 frontal vor zwei parallel nebeneinander Fördertechniksystemen 22a, 22b zum An- und Abtransport der Quellbehälter 24a bzw. der Zielbehälter 24b. Jedes der Fördertechniksysteme 22a, 22b umfasst zwei Bahnen, eine zum Abtransport und eine zum Antransport der jeweiligen Behälter/Kartons bzw. eine Bahn mit einer Haarnadelkonfiguration.

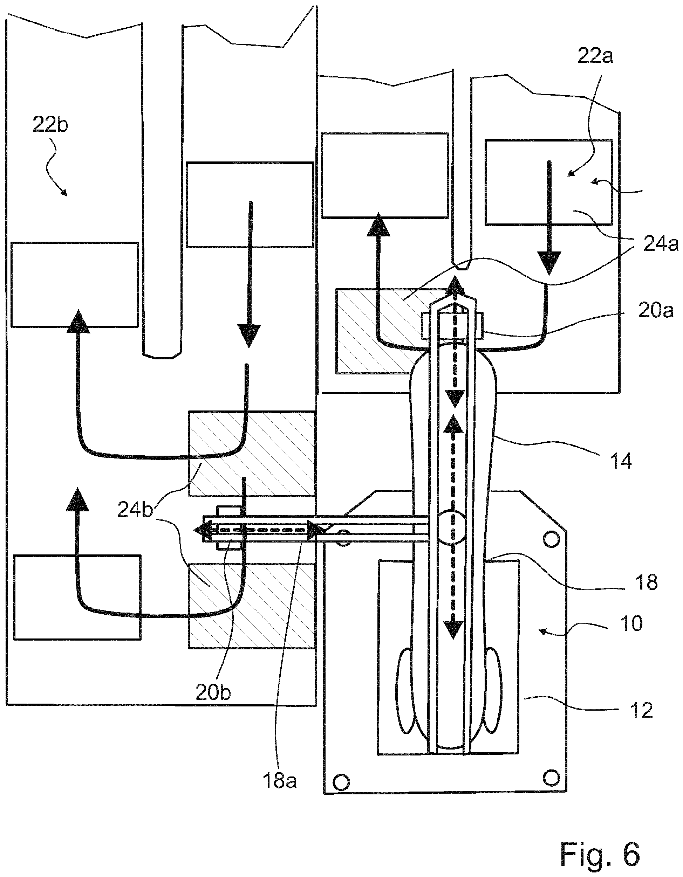

Durch die unabhängige Verstellbarkeit Zweige 18a, 18b des Tragarms 18 kann der Kommissionierroboter 10 an beliebige Geometrien von Kommissionierarbeitsplätzen angepasst werden, auch an solche, an denen die Förderbahnen in einem Winkel zueinander verlaufen wie in Fig. 6 dargestellt.

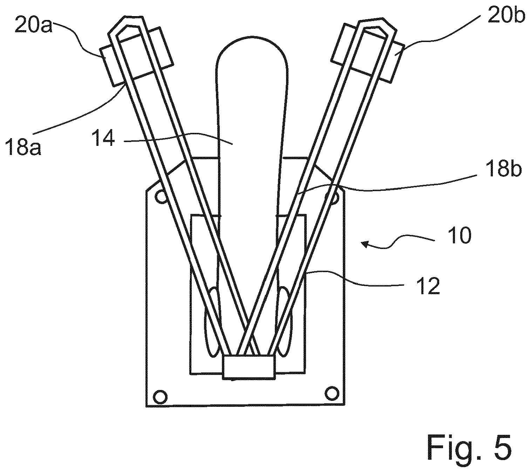

Fig. 5 zeigt einen Kommissionierroboter mit zwei Tragarmen 18a, 18b nach einem weiteren Ausführungsbeispiel der Erfindung in einer Draufsicht. Die beiden Tragarme 18a, 18b ragen schräg in verschiedene Richtungen vor, wobei die Richtungen in verschiedenen Varianten entweder fest vorgegeben sein können oder unabhängig voneinander verstellbar sind, z.B. durch eine schwenkbare Befestigung der Tragarme 18a, 18b am Sockel 12.

Fig. 6 zeigt einen Kommissionierroboter 10 mit zwei Kameras 20a, 20b nach einem weiteren Ausführungsbeispiel der Erfindung in einer Draufsicht. Eine der Kameras 20a ist an einem seitlich an dem Haupt-Tragarm 18 angebrachten Tragarm 18a angeordnet und die andere Kamera 20a am vorderen Ende des Haupt-Tragarms 18. Für z.B. Kommissionier-Arbeitsplatztypen mit rechtwinklig zueinander angeordneten Quell- und Zielbehälterförderbahnen 22a, 22b.

An dem in Fig. 6 dargestellten Kommissioniersystem steht die Kommissionierperson bzw. der Kommissionierroboter 10 in einem von zwei Fördertechniksystemen 22a, 22b zum An- und Abtransport der Quellbehälter 24a bzw. der Zielbehälter 24b eingeschlossenen Winkel. Ein Fördertechniksystem 22a zum An- und Abtransport der Quellbehälter 24a umfasst zwei Bahnen bzw. eine Bahn mit einer Haarnadelkonfiguration, eine zum Abtransport und eine zum Antransport der Quellbehälter 24a. Ein Fördertechniksystem 22b zum An- und Abtransport der Zielbehälter 24b umfasst zwei Bahnen bzw. eine Bahn mit einer Haarnadelkonfiguration für die Zielbehälter 24b, wobei das Fördertechniksystem 22b in der Haupt-Förderrichtung gegenüber dem Fördertechniksystem 22a versetzt ist.

In der in Fig. 6 dargestellten Konfiguration kann der Kommissionierroboter 10 gleichzeitig zwei oder mehr aktive Zielbehälter 24b bedienen. Der Kommissionierroboter 10 kann zur Verwendung in einer gegenüber Fig. 6 spiegelverkehrten Anordnung von Fördertechniksystemen 22a, 22b einfach umgerüstet werden, indem der Tragarm 18a auf die andere Seite des Haupt-Tragarms 18 geschwenkt/umgebaut wird.

In Fig. 6 visualisieren die Pfeile mit dicken, durchgehenden Linien die Transportwege der Quell- und/oder Zielbehälter 24a, 24b und die gestrichelt dargestellten Pfeile die Verstellmöglichkeiten der Kameras 22a, 22b am Tragarm 18 bzw. 18a bzw. des Tragarms 18a am Haupt-Tragarm 18.

## Patentansprüche

1. Kommissionierroboter mit einem verfahrbaren Sockel (12) mit einer in einer im Betrieb einer Fördertechnik (22) zugewandten Vorderseite und einem stehend auf dem Sockel (12) angeordneten und zur Vorderseite hin auskragenden Greifarm (14) zum Kommissionieren von Waren an einem Ware-zur-Person - Kommissionierarbeitsplatz (36), und mit wenigstens einem unabhängig vom Greifarm (14) in einer Montageposition an dem Sockel (12) befestigten Tragarm (18) zum Tragen wenigstens einer Kamera zum Erfassen von Bilddaten für den Kommissioniervorgang, wobei der Tragarm (18) bezogen auf die Richtung der Vorderseite hinter dem Greifarm (14) angeordnet ist und unter Berücksichtigung der im hinteren Bereich des Sockels (12) gelegenen Montageposition, zur Vorderseite hin auskragt, so dass die Kamera (20) vor der Vorderseite des Sockels (12) etwa mittig über Quell- und/oder Zielbehältern (24a, 24b) auf der Fördertechnik (22) und vor der Vorderseite des Sockels (12) angeordnet ist, und der Tragarm (18) den Greifarm (14) in wenigstens einer Betriebskonfiguration mit aufrechtem erstem Glied (14a) und horizontalem zweitem Glied (14b) den Greifarm (14) in der Höhe überragt, **gekennzeichnet dadurch, dass** die Kamera in der wenigstens einen Betriebskonfiguration in der vertikalen Richtung vor dem freien Ende des Greifarms (14) und wenigstens 40-60 cm vor der Vorderseite des Sockels (12) angeordnet ist und dass der Tragarm (18) den Greifarm (14) der wenigstens einen Betriebskonfiguration mit aufrechtem erstem Glied (14a) und horizontalem zweitem Glied (14b) den Greifarm (14) in der Höhe um 10 - 30 cm überragt und wobei an der Vorderseite des Sockels (12), die im Betrieb der Fördertechnik (22) des Kommissionierarbeitsplatzes (36) zugewandt ist, Arretierungsmittel (30) zum Arretieren des Sockels (12) in einer vorgegebenen Position relativ zur Fördertechnik (22) vorgesehen sind.

2. Kommissionierroboter nach Anspruch 1,
**dadurch gekennzeichnet, dass** die Kamera als 3D-Kamera ausgestaltet ist.

3. Kommissionierroboter nach einem der vorhergehenden Ansprüche,
**gekennzeichnet durch**
eine in den Sockel (12) integrierte Steuerung (26), vorzugsweise mit Bildverarbeitungssoftware zum Verarbeiten der von der Kamera (20) erfassten Bilddaten, zum Steuern des Greifarms (14) abhängig von den Bilddaten.

4. Kommissionierroboter nach Anspruch 1,
**dadurch gekennzeichnet, dass**
die Arretierungsmittel (30) Führungsschrägen (30c - 30f) zum Zentrieren des Sockels (12) beim Arretieren umfassen.

5. Kommissionierroboter nach einem der vorhergehenden Ansprüche,
**dadurch gekennzeichnet, dass**
die Arretierungsmittel (30) eine lösbare Rastverbindung umfassen.

6. Kommissionierroboter nach einem der vorhergehenden Ansprüche,
**dadurch gekennzeichnet, dass**
die Arretierungsmittel (30) an einem unteren Rand des Sockels (12) angeordnet sind und von der einer Vorderseite des Sockels (12) in Richtung der Fördertechnik (22) des Kommissionierarbeitsplatzes (36) vorspringen.

7. Kommissionierroboter nach einem der vorhergehenden Ansprüche,
**dadurch gekennzeichnet, dass**
an einer Seitenfläche des Sockels (12) eine Halterung für durch den Roboter vollautomatisch auswechselbare Greifwerkzeuge vorgesehen ist.

8. Kommissionierroboter nach einem der vorhergehenden Ansprüche,
**gekennzeichnet durch**
wenigstens zwei Tragarme (18a, 18b) oder wenigstens zwei Zweige (18a, 18b) eines Tragarms (18) zum Halten von jeweils wenigstens einer Kamera (20a, 20b), wobei die eine Kamera (20a) zum Überwachen eines Quellbehälters (24a) am Kommissionierarbeitsplatz (36) ausgelegt ist und die andere Kamera (20b) zum Überwachen eines Zielbehälters (24b) am Kommissionierarbeitsplatz (36) ausgelegt ist.

9. Kommissionierroboter nach einem der vorhergehenden Ansprüche,
**gekennzeichnet durch**
wenigstens einen an dem Sockel (12) angeordneten Sensor (42) zum Erkennen eines Fremdobjekts oder eines Menschen in einer Umgebung des Sockels (12) und/oder Greifarms (14).

10. Kommissionierroboter nach Anspruch 9,
**gekennzeichnet durch**
zwei an dem Sockel (12) angeordnete Sensoren (42) und 270° Erfassungswinkel zur Überwachung eines zugänglichen Bereichs hinter dem und seitlich neben dem Kommissionierroboter (10).

11. Kommissionierroboter nach Anspruch 9 oder 10,
**dadurch gekennzeichnet, dass**
an dem Sockel (12) wenigstens ein Start-Stopp-Schalter (48) vorgesehen ist, wobei eine Steuerung (26) dazu ausgelegt ist, den Kommissionierbetrieb nach einer Betätigung des Start-Stopp-Schalters (48) zum Starten des Kommissionierbetriebs erst dann zu starten, wenn der Sensor (42) keinen Menschen in einer Umgebung des Sockels (12) und/oder Greifarms (14) mehr erkennt.

12. Kommissionierroboter nach einem der vorhergehenden Ansprüche,
**gekennzeichnet durch**
wenigstens eine Versorgungsleitung (46) zum Anschluss des Kommissionierroboters (10) an eine Energieversorgung, Druckluft und/oder an ein Datennetz und durch eine Halterung zum Halten der Versorgungsleitung (46) beim Verfahren des Kommissionierroboters (10).

13. Kommissionierroboter nach einem der vorhergehenden Ansprüche,
**dadurch gekennzeichnet, dass**
an dem Sockel (12) Rollen (32) zum Verfahren des Kommissionierroboters (10) und Stützen (34) zum Herstellen eines stabilen Stands am Zielort des Kommissionierroboters (10) vorgesehen sind.

14. Kommissioniersystem, umfassend einen Kommissionierroboter (10) nach einem der Ansprüche 1 - 13 und einen Ware-zur-Person Kommissionierarbeitsplatz (36) für eine Kommissionierperson mit Fördertechnik (22) zum An- oder Abtransportieren von Quell- oder Zielbehältern (24a, 24b) mit Mitteln zum Arretieren eines Sockels (12) des Kommissionierroboters (10).

## Claims

1. Picking robot having a movable base (12) with a front side facing a conveyor system (22) during operation and a gripper arm (14) arranged upright on the base (12) and projecting towards the front side for picking goods at a goods-to-person picking workstation (36),
at least one support arm (18) attached to the base (12) independently of the gripper arm (14) in a mounting position for supporting at least one camera for capturing image data for the order picking process, wherein the support arm (18) is arranged behind the gripper arm (14) with respect to the direction of the front side and projects, with regard to the mounting position located in the rear region of the base (12), over the front side, so that the camera (20) is arranged in front of the front side of the base (12) approximately centrally above source and/or target containers (24a, 24b) on the conveyor system (22) and in front of the front side of the base (12), and the support arm (18) projects in height beyond the gripper arm (14) in at least one operating configuration with an upright first member (14a) and a horizontal second member (14b),
**characterised in that** in the at least one operating configuration, the camera is arranged in front of the free end of the gripper arm (14) in the vertical direction and at least 40-60 cm in front of the front side of the base (12), and **in that** the support arm (18) projects above the gripper arm (14) by 10-30 cm in height in the at least one operating configuration with upright first member (14a) and horizontal second member (14b), and wherein locking means (30) are provided for locking the base (12) in a predetermined position relative to the conveyor system (22) at the front side of the base (12), which in operation faces the conveyor system (22) of the picking workstation (36).

2. Picking robot according to claim 1,
**characterised in that** the camera is constituted as a 3D camera.

3. Picking robot according to one of the preceding claims, **characterised by**
a controller (26) integrated in the base (12), preferably with image processing software for processing the image data captured by the camera (20), for controlling the gripper arm (14) as a function of the image data.

4. Picking robot according to claim 1,
**characterised in that**
the locking means (30) comprise guide slopes (30c - 30f) for centring the base (12) in the course of locking.

5. Picking robot according to one of the preceding claims, **characterised in that**
the locking means (30) comprise a detachable latching connection.

6. Picking robot according to one of the preceding claims, **characterised in that**
the locking means (30) are arranged at a lower edge of the base (12) and project from one front side of the base (12) in the direction of the conveyor system (22) of the picking workstation (36).

7. Picking robot according to one of the preceding claims, **characterised in that**
a holder for gripping tools that can be exchanged fully automatically by the robot is provided on a side surface of the base (12).

8. Picking robot according to one of the preceding claims, **characterised by**
at least two support arms (18a, 18b) or at least two branches (18a, 18b) of a support arm (18) for holding at least one camera (20a, 20b) in each case, wherein one camera (20a) is designed to monitor a source container (24a) at the picking workstation (36) and the other camera (20b) is designed to monitor a target container (24b) at the picking workstation (36).

9. Picking robot according to any of the preceding claims, **characterised by**
at least one sensor (42) arranged on the base (12) for detecting a foreign object or a human in an environment of the base (12) and/or gripper arm (14).

10. Picking robot according to claim 9,
**characterised by**
two sensors (42) arranged on the base (12) and a detection angle of 270° for monitoring an accessible area behind and to the side of the picking robot (10).

11. Picking robot according to claim 9 or 10,
**characterised in that**
at least one start-stop switch (48) is provided on the base (12), wherein a controller (26) is designed to start the picking operation after actuation of the start-stop switch (48) for starting the picking operation only when the sensor (42) no longer detects any human in an environment of the base (12) and/or gripper arm (14).

12. Picking robot according to one of the preceding claims, **characterised by**
at least one supply line (46) for connecting the order picking robot (10) to a power supply, compressed air and/or to a data network, and by a holder for holding the supply line (46) when the order picking robot (10) is moved.

13. Picking robot according to one of the preceding claims, **characterised in that**
rollers (32) for moving the picking robot (10) and supports (34) for producing a stable stand at the destination of the picking robot (10) are provided on the base (12).

14. Picking system, comprising a picking robot (10) according to one of claims 1 - 13 and a goods-to-person picking workstation (36) for a picking person with conveyor technology (22) for transporting source or target containers (24a, 24b) to or from the workstation with means for locking a base (12) of a picking robot (10).

## Revendications

1. Robot de prélèvement de stock ayant une base mobile (12) avec un côté avant faisant face à un système transporteur (22) pendant une opération et un bras (14) de préhension agencé vertical sur la base (12) et se projetant vers le côté avant pour prélever des marchandises au niveau d'une station de travail (36) de prélèvement de marchandises vers humain,
au moins un bras support (18) fixé à la base (12) indépendamment du bras (14) de préhension dans une position de montage pour supporter au moins une caméra pour capturer des données d'image pour le processus de préparation de commande, dans lequel le bras support (18) est agencé derrière le bras (14) de préhension par rapport au sens du côté avant et se projette, par rapport à la position de montage située dans la région arrière de la base (12), par-dessus le côté avant, de telle sorte que la caméra (20) est agencée en avant du côté avant de la base (12) approximativement centralement au-dessus de conteneurs source et/ou cible (24a, 24b) sur le système transporteur (22) et en avant du côté avant de la base (12), et le bras support (18) se projette en hauteur au-delà du bras (14) de préhension dans au moins une configuration opérationnelle avec un premier élément vertical (14a) et un deuxième élément horizontal (14b),
**caractérisé en ce que,** dans l'au moins une configuration opérationnelle, la caméra est agencée en avant de l'extrémité libre du bras (14) de préhension dans le sens vertical et au moins 40-60 cm en avant du côté avant de la base (12), et **en ce que** le bras support (18) se projette au-dessus du bras (14) de préhension de 10-30 cm en hauteur dans l'au moins une configuration opérationnelle avec un premier élément vertical (14a) et un deuxième élément horizontal (14b), et dans lequel des moyens (30) de blocage sont prévus pour bloquer le base (12) dans une position prédéterminée par rapport au système transporteur (22) au niveau du côté avant de la base (12), qui, en opération, fait face au système transporteur (22) de la station de travail (36) de prélèvement.

2. Robot de prélèvement de stock selon la revendication 1,
**caractérisé en ce que** la caméra est constituée comme une caméra 3D.

3. Robot de prélèvement de stock selon l'une des revendications précédentes, **caractérisé par**
un contrôleur (26) intégré dans la base (12), préférablement avec un logiciel de traitement d'images pour traiter les données d'image capturées par la caméra (20), pour commander le bras (14) de préhension comme une fonction des données d'image.

4. Robot de prélèvement de stock selon la revendication 1,
**caractérisé en ce que**
les moyens (30) de blocage comprennent des pentes (30c - 30f) de guidage pour centrer la base (12) au cours du blocage.

5. Robot de prélèvement de stock selon l'une des revendications précédentes, **caractérisé en ce que**
les moyens (30) de blocage comprennent une connexion de verrouillage libérable.

6. Robot de prélèvement de stock selon l'une des revendications précédentes, **caractérisé en ce que**
les moyens (30) de blocage sont agencés au niveau d'un bord inférieur de la base (12) et se projettent depuis un côté avant de la base (12) dans le sens du système transporteur (22) de la station de travail (36) de prélèvement.

7. Robot de prélèvement de stock selon l'une des revendications précédentes, **caractérisé en ce que**
un dispositif de maintien pour des outils de préhension qui peuvent être changés totalement automatiquement par le robot est prévu sur une surface latérale de la base (12).

8. Robot de prélèvement de stock selon l'une des revendications précédentes, **caractérisé par**
au moins deux bras support (18a, 18b) ou au moins deux branches (18a, 18b) d'un bras support (18) pour maintenir au moins une caméra (20a, 20b) dans chaque cas, dans lequel une caméra (20a) est conçue pour surveiller un conteneur source (24a) au niveau de la station de travail (36) de prélèvement et l'autre caméra (20b) est conçue pour surveiller un conteneur cible (20b) au niveau de la station de travail (36) de prélèvement.

9. Robot de prélèvement de stock selon l'une des revendications précédentes, **caractérisé par**
au moins un capteur (42) agencé sur la base (12) pour détecter un objet étranger ou un humain dans un environnement de la base (12) et/ou du bras (14) de préhension.

10. Robot de prélèvement de stock selon la revendication 9,
**caractérisé par**
deux capteurs (42) agencés sur la base (12) et un angle de détection de 270° pour surveiller une zone accessible derrière et sur le côté du robot (10) de prélèvement de stock.

11. Robot de prélèvement de stock selon la revendication 9 ou 10,
**caractérisé en ce que**
au moins un commutateur marche-arrêt (48) est prévu sur la base (12), dans lequel un contrôleur (26) est conçu pour démarrer l'opération de prélèvement après actionnement du commutateur marche-arrêt (48) pour commencer l'opération de prélèvement uniquement lorsque le capteur (42) ne détecte plus d'humain dans un environnement de la base (12) et/ou du bras (14) de préhension.

12. Robot de prélèvement de stock selon l'une des revendications précédentes, **caractérisé par**
au moins une ligne (46) d'alimentation pour connecter le robot (10) de préparation de commande à une alimentation électrique, de l'air comprimé et/ou à un réseau de données, et par un dispositif de maintien pour maintenir la ligne (46) d'alimentation lorsque le robot (10) de préparation de commande est déplacé.

13. Robot de prélèvement de stock selon l'une des revendications précédentes, **caractérisé en ce que**
des roulettes (32) pour déplacer le robot (10) de prélèvement de stock et des supports (34) pour produire un socle stable à la destination du robot (10) de prélèvement de stock sont prévus sur la base (12).

14. Système de prélèvement de stock, comprenant un robot (10) de prélèvement de stock selon l'une des revendications 1 - 13 et une station de travail (36) de prélèvement de marchandises vers humain pour un humain de prélèvement avec une technologie de transporteur (22) pour transporter des conteneurs source ou cible (24a, 24b) jusqu'à ou depuis la station de travail avec des moyens pour bloquer une base (12) d'un robot (10) de prélèvement de stock.
